# DEMANDE DE BREVET EUROPEEN

(11) **EP 0 692 644 A1**
(43) Date de publication de la demande: **17.01.1996**
(21) Numéro de dépôt: 95470027.4
(22) Date de dépôt: 06.07.1995
(51) Int. Cl.: F16B 43/00, F16F 1/32

(54) **Système de rondelles coniques empilées et liées entre elles**

(30) Priorité: 15.07.1994 FR 9408952
(71) Demandeur: GRIS DECOUPAGE, F-54700 Lesmenils (FR)
(72) Inventeur: Gris, Francis, F-57000 Metz (FR)
(74) Mandataire: Schmit, Christian Norbert Marie

(57) **Abrégé**

Le système (1) de rondelles coniques empilées avec leur conicité dirigée dans le même sens, et liées entre elles, est caractérisé en ce que les rondelles (2) sont liées par collage.

Le joint (3) de colle est préférentiellement souple pour permettre le déplacement relatif des rondelles (2) lors de leur compression.

Application notamment aux ensembles vissés ou boulonnés, où le système de rondelles coniques empilées est utilisé comme rondelle de freinage.

## Description

La présente invention concerne un système de rondelles coniques empilées et liées entre elles.

On connaît déjà de tels systèmes, constitués de plusieurs rondelles coniques, couramment appelées rondelles Belleville, empilées coaxialement, avec leur conicité dirigée dans le même sens. L'empilage forme un système élastique de grande raideur et de déformabilité réduite.

Ces empilages de rondelles dans le même sens sont principalement destinés à éviter le desserrage ou à compenser des jeux (dilatation, usure...) sur des ensembles vissés ou boulonnés, agissant ainsi comme des rondelles freins. Ils sont constitués par exemple de trois ou quatre rondelles de type "Belleville" assemblées par un serti en laiton monté sur le diamètre intérieur.

L'utilisateur choisit généralement de tels systèmes de rondelles pour assurer un effort de tension sur la tige filetée de l'organe d'assemblage, au lieu d'une rondelle monobloc d'épaisseur équivalente aux trois ou quatre rondelles assemblées. En effet, une rondelle d'épaisseur trop importante pour les diamètres concernés, peut assurer un effort d'écrasement suffisant, mais ne restitue pas assez d'énergie élastique du fait de son affaissement. Cet affaissement est lié aux états de contraintes générés dans la rondelle qui provoque une plastification et en conséquence une perte de hauteur notable.

Dans le cas de rondelles empilées, les contraintes sont plus faibles (elles dépendent de l'épaisseur et des diamètres de chaque rondelle), puisqu'il peut y avoir un déplacement relatif entre les rondelles empilées. L'effort de serrage et l'effort de restitution restent importants, puisque le système reste dans le domaine élastique.

Cette souplesse des systèmes de rondelles empilées justifie l'utilisation de plusieurs rondelles ressort au lieu d'une seule plus épaisse. Il est connu de réaliser l'assemblage de ces rondelles par une bague sertie sur les rondelles d'extrémité, ce qui présente comme avantage, par rapport à plusieurs rondelles non assemblées, la facilité du montage et du démontage, lors d'opérations d'entretien notamment : manipulation de moins d'éléments et certitude sur le nombre de rondelles montées, du fait que toutes les rondelles d'un empilage restent solidaires.

La bague sertie est couramment réalisée en laiton sur presse avec des outils à suivre pour la plupart des diamètres. Les quantités fabriquées sont toutefois relativement peu importantes et ne justifient pas économiquement l'utilisation d'un outillage de fabrication complexe. La réalisation du sertissage génère en conséquence un coût relativement important lié au manque de productivité des outils simples utilisés dans la pratique.

Il est aussi connu d'utiliser pour la bague d'autres matériaux que le laiton ; par exemple l'acier ou l'aluminium. Hormis les problèmes de tenue en service de ces matériaux (tenue à la corrosion, effet galvanique, tenue en température, etc), la fabrication nécessite pratiquement des outils différents pour chaque matériau, du fait de leurs aptitudes différentes à l'emboutissage.

Par ailleurs, pour sertir les rondelles dans de bonnes conditions, il est nécessaire d'avoir un chanfrein sur la rondelle supérieure, c'est-à-dire celle dont la convexité est dirigée vers l'extérieur de la pile et, pour les épaisseurs importantes, également un chanfrein sur la rondelle inférieure. Les chanfreins permettent d'obtenir un bon assemblage, mais surtout ils évitent que le bord serti de la bague en laiton soit découpé sur les arrêtes des rondelles lors du serrage, par contact avec la tête de vis ou l'écrou. Ces chanfreins engendrent évidemment un coût supplémentaire (outillage, réglage), mais surtout nécessitent une gestion différenciée des éléments composant l'empilage de rondelles. Selon le procédé de découpage des rondelles, on peut en effet avoir des éléments supérieurs (chanfreinés supérieurs), inférieurs (chanfreinés inférieurs) , mixtes (chanfreinés supérieurs et inférieurs) et médian (pas de chanfrein : rondelles du milieu).

Par ailleurs, il est également connu, notamment par le document FR - A - 2 388 170, d'utiliser, à la place de la bague sertie, une pièce en matière plastique conformée de manière que les tranches internes des rondelles soient maintenues sur des rainures circulaires de la dite pièce en plastique. Mais ceci nécessite également la fabrication d'une pièce particulière pour chaque dimension de rondelle, et un tel matériau présente également des inconvénients en ce qui concerne la tenue en service.

La présente invention a pour but de résoudre les problèmes évoqués ci-dessus, et vise en particulier à faciliter la réalisation de systèmes de rondelles empilées et liées entre elles, à en réduire le coût, et à supprimer les inconvénients que présentent, tant lors de la fabrication que de l'utilisation, la présence d'une pièce supplémentaire de liaison des rondelles.

Avec ces objectifs en vue, l'invention a pour objet un système de rondelles coniques empilées avec leur conicité dirigée dans le même sens, et liées entre elles, caractérisé en ce que les rondelles sont liées entre elles par collage.

Grâce à l'invention, toutes les pièces de liaison des rondelles selon l'art antérieur peuvent être supprimées. Il en résulte une économie notable en terme de coût de fabrication et de mise en place de ces pièces. Par ailleurs, l'invention permet de supprimer le stockage de ces pièces de liaison en différentes dimensions adaptées à chaque diamètre de rondelle et à chaque hauteur d'empilage.

Selon une disposition particulière de l'invention, le collage est réalisé par un adhésif formant, après séchage, un joint de colle souple. La souplesse du joint de colle permet un déplacement relatif des rondelles au cours du serrage, ce qui permet de conserver à un tel assemblage de rondelles coniques des caractéristiques équivalentes aux systèmes d'assemblage par bague sertie, notamment en ce qui concerne la possibilité de glissement d'une rondelle sur l'autre, lorsque les rondelles sont comprimées axialement.

L'adhésif peut être déposé entre les faces de deux rondelles adjacentes ou en d'autres endroits, par exemple au niveau des chants, extérieurs ou intérieurs, des rondelles.

Le collage peut aussi être réalisé au moyen d'un film adhésif disposé entre deux rondelles adjacentes, tels qu'un ruban adhésif, ou un film plastique adhérent.

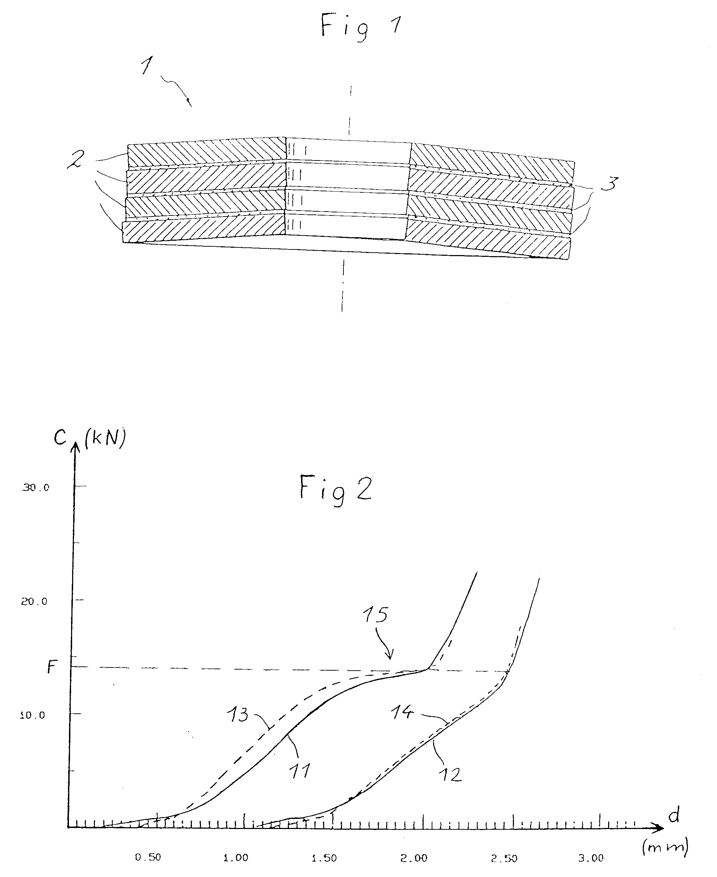

A titre d'exemple, on a représenté sur le dessin de la figure 1, en coupe, un système de rondelles empilées conforme à l'invention, et la figure 2 est une représentation graphique du comportement au serrage d'un système de rondelles collées conformément à l'invention et, à titre comparatif, d'un système de rondelles selon l'art antérieur assemblées par une bague sertie.

Le système 1 est constitué d'un assemblage de quatre rondelles 2 coniques en acier, ayant sensiblement les mêmes dimensions et, ayant leur conicité dirigée dans le même sens, c'est-à-dire qu'elles s'emboîtent l'une sur l'autre. Bien évidemment, le nombre de rondelles peut être différent. Les rondelles 2 sont liées par un joint de colle, tel qu'un film de colle 3 déposé à chaque interface entre deux rondelles adjacentes.

L'adhésif choisi pour réaliser le joint de colle est tel qu'il conserve après séchage une souplesse suffisante pour permettre le déplacement relatif des rondelles lorsque, sous l'effet d'une compression axiale des rondelles au cours de leur utilisation, celle-ci s'écrasent en se déformant de la forme conique de repos vers une forme aplatie.

Grâce à la souplesse du joint de colle, le glissement à l'interface peut se produire sans qu'il y ait rupture de l'assemblage. Ainsi, lors d'un démontage ultérieur qui supprime la compression de l'ensemble de rondelles, celles-ci peuvent retrouver leur forme conique d'origine, tout en restant solidaires. Par ailleurs, la souplesse du joint de colle confère à l'assemblage une bonne résistance aux chocs.

L'adhésif utilisé doit permettre notamment d'assurer une prise rapide, pour des raisons de productivité lors de l'assemblage des rondelles.

Par ailleurs, après séchage, il doit assurer une adhérence suffisante pour maintenir les rondelles assemblées au cours de diverses manipulations (transports, montage, démontage), et avoir une bonne tenue dans le temps, que l'empilage de rondelles soit sans contrainte mécanique (pendant le stockage) ou sous contrainte (serrage prolongé).

Enfin, il sera choisi de manière à assurer la tenue de l'assemblage dans une plage de températures la plus large possible, déterminée en fonction des conditions d'utilisation prévues.

Préférentiellement, on choisira une colle ayant les caractéristiques suivantes : allongement à la rupture supérieur à 100%, réticulation rapide, tenue aux chocs, tenue à une température supérieure à 120°C.

On pourra par exemple utiliser une colle polyuréthane bi-composant, telle que celles commercialisées sous la désignation : CECA TOPFIX XPU 4726 AC/BC, ou une colle polyamide telle que celle commercialisée sous la désignation TRL THERMELT 869, etc...

Le graphique de la figure 2 montre à titre d'exemple les résultats d'essais comparatifs du comportement au serrage (écrasement d en fonction de la charge C) d'un système de quatre rondelles assemblées par sertis selon l'art antérieur (courbes en traits pleins 11, 12) et d'un système composées de quatres rondelles assemblées par une colle polyuréthane du type de celle mentionnée ci-dessus déposée entre les faces des rondelles, conformément à l'invention (courbes en traits pointillés 13, 14) . Les rondelles sont identiques dans les deux cas. Les courbes 11 et 13 représentent la déformation sous charge lors d'une première mise en charge. Les courbes 12 et 14 représentent la déformation sous charge lors d'un deuxième serrage, l'origine des courbes étant décalé sur l'axe des déformations pour faciliter la lisibilité des tracés.

Le palier 15 des courbes 11, 13 de première charge correspond à l'écrouissage du métal constitutif des rondelles lorsque celles-ci sont écrasées sensiblement à plat. La force utile F, qui définit le niveau de contraintes dans l'organe de serrage, par exemple la vis d'un assemblage vissé avec interposition d'un tel système de rondelles sous la tête de la vis, est l'effort sous lequel les rondelles sont ainsi écrasées sensiblement à plat.

On remarque que les comportements des deux systèmes sont très peu différents, ce qui montre l'influence négligeable de la colle sur le comportement mécanique du système de rondelles empilées selon l'invention.

Par ailleurs, les essais ont permis de montrer que les rondelles collées mises en compression à plat et subissant un cyclage climatique selon la norme NF T 76109 restent solidaires après relâchement de la charge et démontage des organes de serrage.

En plus des avantages déjà indiqués, l'assemblage des rondelles par un film de colle permet d'éviter les effets de pile électrochimique qui peuvent apparaître entre des métaux différents et conduire à une corrosion, préjudiciable à la tenue dans le temps et à la constance des caractéristiques mécaniques de l'assemblage, en particulier l'effet galvanique qui peut se produire entre les rondelles et le serti des systèmes de rondelles selon l'art antérieur.

L'invention peut s'appliquer à des rondelles de différents types, dimensions et matériaux (métal ou composite) permettant d'assurer l'effet de ressort requis pour un tel assemblage.

Les rondelles peuvent également comporter un revêtement ou un traitement de surface.

Dans un même assemblage, les rondelles peuvent être de formes, dimensions ou matériaux différents.

Pour des applications où l'assemblage de rondelles n'est pas normalement susceptible de démontage, le joint de colle peut être rigide ; il suffit alors de choisir la colle de manière que l'effort de rupture du joint soit suffisamment faible pour que la liaison assurée par ce joint puisse céder lorsque les rondelles sont déformées par compression.

## Revendications

1. Système de rondelles coniques empilées avec leur conicité dirigée dans le même sens, et liées entre elles, caractérisé en ce que les rondelles (2) sont liées entre elles par collage.

2. Système de rondelles selon la revendication 1, caractérisé en ce que les rondelles (2) sont sensiblement de même dimensions.

3. Système de rondelles selon l'une des revendications 1 ou 2, caractérisé en ce que les rondelles (2) sont en métal ou en matériau composite.

4. Système de rondelles selon l'une des revendications 1 à 3, caractérisé en ce que les rondelles (2) comportent un revêtement ou un traitement de surface.

5. Système de rondelles selon l'une des revendications 1 à 4, caractérisé en ce que le collage est réalisé par un adhésif formant après séchage un joint (3) de colle souple.

6. Système de rondelles selon l'une quelconque des revendications 1 à 5, caractérisé en ce que l'adhésif est déposé entre les faces de deux rondelles (2) adjacentes.

7. Système de rondelles selon l'une quelconque des revendications 1 à 5, caractérisé en ce que l'adhésif est déposé au niveau des chants des rondelles (2).

8. Système de rondelles selon l'une quelconque des revendications 1 à 5, caractérisé en ce que le collage est réalisé au moyen d'un film adhésif placé entre deux rondelles adjacentes.
